# EUROPEAN PATENT APPLICATION

(11) **EP 4 521 313 A1**
(43) Date of publication of application: **12.03.2025**
(21) Application number: 23196040.2
(22) Date of filing: 07.09.2023
(51) Int. Cl.: G06Q 10/04, G06Q 50/06, H02J 3/00, H02J 3/32

(54) **SENSITIVITY ANALYSIS FOR A SYSTEM AND METHOD FOR OPTIMIZING AN ENERGY MANAGEMENT**

(71) Applicant: ABB SCHWEIZ AG, 5400 Baden (CH)
(72) Inventor: KOTRIWALA, Arzam Muzaffar, 68526 Ladenburg (DE); PRIMAS, Bernhard, 68165 Mannheim (DE); AMIHAI, Ido, 64646 Heppenheim (DE); GUTERMUTH, Georg, 69115 Heidelberg (DE); SCHLOEDER, Matthias, 69126 Heidelberg (DE); BISKOPING, Matthias, 69493 Hirschberg (DE)
(74) Representative: Maiwald GmbH

(57) **Abstract**

A system (100) for optimizing an energy management of a site, the system (100) comprising: an energy optimizer (10), wherein the energy optimizer (10) is adapted to determine one or more optimization goals (12) based on an optimization algorithm (14), a data variator (20), wherein the data variator (20) is adapted to provide at least one first energy data input and at least one second energy data input, different to the first energy data input, to the energy optimizer (10), wherein the energy optimizer (10) is adapted to receive the first and second energy data inputs from the data variator (20), and to determine, based the first and second energy data inputs, respective at least one first and second energy data outputs via the optimization algorithm (14), wherein a data sensitivity of the energy optimizer (10) can be determined with respect to the first and second energy data inputs and the first and second energy data outputs.

## Description

### 1. FIELD OF THE INVENTION

The invention relates to a system and a method for optimizing an energy management of a site, a computer program product, and a computer-readable medium.

### 2. BACKGROUND

Plants, Facilities, Campuses, or Industrial Sites often comprise large conglomerates of multi-energy streams (electricity, gas, heat) with a plurality of different energy consumers, grid connections and options for energy generation. In such energy networks, energy management systems are often provided to control power flows between power generating and power consuming assets, battery storages and a grid to facilitate the overall energy management and resource employment. However, in such complex systems, the impact of certain conditions and parameters and their potential influence on the overall energy management is often not well assessable due to the complexity and interplay of the involved entities.

Thus, there exists a need for an improved transparent and comprehensible energy management system and method.

### 3. SUMMARY OF THE INVENTION

The object is achieved by the present invention according to the independent claims. Preferred embodiments of the invention are provided in the dependent claims, the description and the accompanying figures.

The present invention relates to a system for optimizing an energy management of a site.

The system comprises an energy optimizer, wherein the energy optimizer is adapted to determine one or more optimization goals based on an optimization algorithm.

The system further comprises a data variator, wherein the data variator is adapted to provide at least one first energy data input and at least one second energy data input, different to the first energy data input, to the energy optimizer.

The system further comprises that the energy optimizer is adapted to receive the first and second energy data inputs from the data variator.

The system further comprises that the energy optimizer is adapted to determine, based the first and second energy data inputs, respective at least one first and second energy data outputs via the optimization algorithm

The system further comprises that a data sensitivity of the energy optimizer can be determined with respect to the first and second energy data inputs and the first and second energy data outputs.

By leveraging a data sensitivity analysis of the energy optimizer, it may be beneficially assessed how the energy data output of the energy optimizer is altered when the energy input data changes. Further, the sensitivity analysis results may enable informed changes or improvements to the optimization algorithm. This may include a weighted penalization to dampen the effect of changes in a variable seen to be highly sensitive.

Furthermore, costs may be reduced by selecting and adapting appropriately by managing the respective energy input and output. For instance, purchasing power can be optimized with respect to certain favorable day or night times, in which, for instance, a cheaper tariff is provided.

The system may also provide transparency regarding the impact of distinct energy input parameter changes to energy data outputs, and may accordingly allow, for example, the selection of an appropriate optimization method. Thus, an operator of the system or the energy optimizer may consider, for instance, safety margins appropriately to prevent shortcomings on the energy input or output side.

Furthermore, the optimization of the energy optimizer may be performed without particularly knowing the underlying forecasting and/or optimization algorithms. The system according to the present invention may also allow for improved operation and control strategies i.e., data-backed revisions of employed control strategies.

Herein, a site may be understood as any system or network comprising one or more energy consumers or producers. This may include but is not limited to one or more plants, microgrids, facilities, campuses and/or industrial sites. The elements of the system of the present invention (e.g. the energy optimizer and/or the data variator) may be provided in a same location or maybe located remotely and connected to the system via a network.

The energy optimizer and the data variator may be implemented as virtual means, such as one or more software programs or apps working individually or in combination with each other. The energy optimizer may work based on artificial intelligence or machine learning and may comprise the optimization algorithm.

The optimization algorithm may be understood as a means for determining an output result based on one or more data inputs and certain boundary conditions to be considered for the determination of the output. The system may also comprise more than one optimization algorithm, which may be selected for instance in dependence of an optimization goal to be achieved.

First and second energy data inputs is understood as any suitable energy relating input data and may include, for instance, the net load of a building and/or individual or groups of loads from a building or the feed in quantity of one or more solar panels. The present invention is however not limited to these examples and may accordingly include any conceivable energy related data, suitable for optimization, e.g. regarding energy production or consumption. Also combinations of different sources may be employed as an energy data input.

The first and second energy data input may include energy data of the same or different time steps or time periods, e.g. of one or more distinct days, weeks or months. The energy input data may be stored on local or remote on respective one or more data storing means such as databases and be provided, for instance, via a network to the data variator and/or the energy optimizer.

First and second energy data outputs is understood as any suitable energy relating output data and may include energy data sets that were optimized by the energy optimizer based on the input data considering an optimization goal, such as peak shaving. The energy data output may also comprise a difference determined between different optimization goals.

The data variator may be implemented in the form of an automated software for the application of perturbations to the first energy data input. Or the data variator may be controlled by an operator to (semi-) manually apply perturbations or variations to a set of energy input data. The first and second energy data input may comprise same or different values regarding amplitudes and/or corresponding time points or ranges.

The data sensitivity according to the present invention may be understood as an indicator that shows how strong an impact of the variation of the data input is regarding a calculated data output. For example, an output may be only little impacted by variances in the input data. Hence, the sensitivity may be considered low. On the other hand, if an output is highly impacted by variances in the input data, the sensitivity may be accordingly considered high.

Furthermore, by leveraging a sensitivity analysis, a clarifying reasoning to an end user may be provided regarding the output energy strategies of an energy optimizer. Thus, a user is enabled to make decisions that are more qualified for controlling the energy management.

In a preferred embodiment, the system comprises a parameter variator additionally or alternatively to the data variator, wherein the parameter variator is adapted to provide at least one first energy parameter input and at least one second energy parameter input, different to the first energy parameter input and, wherein the energy optimizer is adapted to receive the first and second parameter inputs from the parameter variator, and to determine, based the first and second energy parameter inputs, respective at least one first and second energy parameter outputs via the optimization algorithm, wherein a parameter sensitivity of the energy optimizer can be determined with respect to the first and second energy parameter inputs and the first and second energy parameter outputs.

By leveraging a parameter sensitivity analysis of the energy optimizer, it may be accordingly beneficially assessed how the energy data output is altered when the energy parameter changes. Accordingly, the optimization system of the present invention could be adjusted better to the specific configurations leading to an increase of energy savings and/or the reduction of energy consumption. Further, the sensitivity analysis results may enable informed changes or improvements to the optimization algorithm. This may include a weighted penalization to dampen the effect of changes in a variable seen to be highly sensitive.

It may be accordingly determined, that one parameter (e.g. a battery initial state of charge) has a large impact on an optimization output, whereas another parameter (e.g. a battery charge rate) has less impact on an optimization output. Thus, it is allowed to analyze and asses the energy optimizer with respect to different parameters and accordingly optimize the respective output.

An energy parameter input may be accordingly understood as an input to the energy optimizer used to create a corresponding energy parameter output via the optimization algorithm. For instance, a first energy parameter input may comprise a first optimization parameter, which is provided to the energy optimizer, and which leads to a first energy parameter output. Likewise, a second energy parameter input may be different to the first energy parameter input and may comprise a second optimization parameter accordingly different to the first optimization parameter, which is provided to the energy optimizer, and which leads to a second energy parameter output.

The parameter variator may be, similar as the data variator, implemented in the form of an automated software for the application of varying parameters. Or the parameter variator may be controlled by an operator to (semi-) manually apply perturbations or variations to one or more energy parameters.

The parameter variator may be provided alternatively or in combination with the above-described data variator. The system according to the present invention may then be accordingly adapted to determine a sensitivity regarding the input data (i.e. the data sensitivity) and/or to determine the sensitivity regarding the input parameter (i.e. the parameter sensitivity), as described herein. The energy data output and the parameter data output may be provided separately or in form of a combined output.

In a preferred embodiment, the system comprises the data variator and the parameter variator, and a combined data and parameter sensitivity of the energy optimizer can be determined with respect to combination of the first and second energy data inputs and the first and second energy data outputs, as well as the first and second energy parameter inputs and the first and second energy parameter outputs.

Thus, the parameter variator may be provided in combination to the above-described data variator. The energy optimizer may be accordingly analyzed with respect to the sensitivity regarding variations in the energy data input and at the same time regarding different parameters, each affecting the respective outputs of the energy optimizer individually or in combination. This may allow for a sophisticated combined sensitivity analysis of the employed energy optimizer and the respective optimization algorithm.

The variations of the energy input data and the parameters and the resulting determination of the corresponding energy data output and energy parameter output may be performed subsequently or simultaneously. During the data sensitivity analysis, an optimization parameter of may be constant. During the parameter sensitivity analysis, an energy input data (e.g. load amplitudes) may be constant. During the parameter and the data sensitivity analysis, the energy data input may be particularly based on a fixed time-period or time window.

In a preferred embodiment, the at least one first energy data input is based on historical energy data, and the data variator is preferably adapted to vary the historical energy data to create and provide the second energy data input.

Thus, the system may relate on known past energy data, which can be employed as an energy input data for the subsequent determination of the energy data outputs, e.g. for respective forecasts or optimization goals. The historical data may preferably be further varied by the data variator to create at least partly artificial or fictional data, e.g. forecast data.

In case, historical data for said distinct source or site is not available, historical data from another, potentially similar source or site may also be used. This may enhance the flexibility regarding the determination of the data sensitivity and allows analyzing and improving the data output also for sources, for which no sufficient historical data exists.

Furthermore, weights may be assigned to the historical data to weight, for instance, data of higher relevance. This may be, for instance, data that is more recent. Thus, potentially less relevant data (e.g. data from the later past) could be discarded or mitigated in the following sensitivity assessment.

In a preferred embodiment, the historical energy data is based on energy data of at least one energy consumer and/or at least one energy producer.

Energy consumers and/or producers may be any devices or systems, which are adapted to consume or produce energy. Energy consumers may accordingly encompass, for instance, one or more electrically driven devices, such as lights, computers and so forth or also larger energy consuming entities, such as networks or an university campus comprising a plurality of devices consuming energy. Further examples of an energy consumer may be a Heat, Ventilation and Air Conditioning (HVAC) System or an electric vehicle charging etc.

Likewise, an energy producer may be considered as any entity that allows providing electrical energy, which may include a single solar PV cell as well as a wind turbine park comprising a plurality of wind turbines.

Some devices may be both, energy producer and consumer, dependent on their operation. As an example, a rechargeable battery may be energy producer during certain times of the day when it is discharged (e.g. at night times), and energy consumer during other times of the day, when it is charged (e.g. at day times).

In a preferred embodiment, the first energy parameter input is based on an energy parameter, and the parameter variator is preferably adapted to vary the energy parameter to create and provide, based on the varied energy parameter, the second energy parameter input. In a preferred embodiment, the energy parameter is one or more of the following:
- Initial state-of-charge of each battery storage system,
- Limit or capacity of each battery storage system,
- Charge rate and efficiency of each battery storage system,
- Limit of energy that can be taken from the electrical grid,
- Look-ahead time of the forecasting algorithm.

Energy parameters may relate to physical, chemical or electrical boundary conditions of the energy producer or consumer, which may affect an optimization output. Depending on the different parameters, different outcomes from an optimization algorithm may be expected, even if the same data input may be provided. A further example for a suitable energy parameter may be an optimization goal, for instance peak shaving or profile smoothing.

Or the energy parameter may relate to certain variables of an algorithm used for a forecast (cf. look-ahead-time) that may alter an outcome of the optimization. It should be clear that the above examples are not limiting and that further and different parameters could be likewise employed.

In a preferred embodiment, the system further comprises an explainer unit adapted to provide explanations about the sensitivity of the energy optimizer based on the energy data inputs/outputs and/or the energy parameter inputs/outputs.

Once output is available from the data or parameter sensitivity based on the variations provided by the parameter variator and/or the data variator, an explainer unit may assist in making the calculations of the energy optimizer transparent to the end-user.

A set of parameters and optimization results may be stored for each data or parameter variation. The system of the present invention may thus enable a scenario-specific sensitivity analysis and it may be accordingly determined how sensitive an optimization result is with respect to, for instance, timing, magnitude, and duration of peak load. Further, regarding the data sensitivity analysis, for each set of data, differences and/or error values (or an aggregation of them e.g., an average) and the consequent optimization results may be stored.

An explanation may be generated by training a machine learning regressor on this data and applying an Explainable Al (XAI) method, e.g., LIME. This may result in feature contributions that could serve as means of communicating how important or sensitive each of the parameters is with respect to the optimization output.

When computing the aforementioned explanations for a specific set of data, this may result in a "local" explanation. When this is repeated for several windows or time-periods of historical data, the result would serve as a "global" explanation i.e., not specific to a specific time-period but aggregated over a larger time-period. This variance over a larger time-period may be represented by a box plot or shown as variances in a corresponding diagram. Once these explanations are computed, the results may be presented in various ways to an end user. These explanations may also be aggregated on an hourly basis.

The output from the energy optimizer may be coupled with the sensitivity analysis and accordingly presented in a combined manner to an end-user. Providing respective explanations to an end-user may provide end-users with the necessary information to clarify what drives the optimizer result.

Because the energy optimizer output may depend on a number of factors, the influences of each factor may initially not be apparent to the end-user. Thus, providing explanations about the working principle of an optimization algorithm may overcome potential confusion or rejection of the solution provided by the energy optimizer.

Further, the quantified explanations may potentially be converted into natural language for better comprehension for the end-user.

The present invention further relates to a method for optimizing energy management of site.

The method comprises the step of providing to an energy optimizer at least one first and second energy data inputs and/or at least one first and second energy parameter inputs.

The method further comprises the step of determining, by the energy optimizer, based on the first and second energy data inputs and/or the first and second energy parameter inputs, respective at least one first and second energy data outputs, and/or at least one first and second energy parameter outputs.

The method further comprises the step of determining a data sensitivity and/or parameter sensitivity of the energy optimizer based on the energy data inputs and/or the energy parameter inputs, and based on the energy data outputs and/or the energy parameter outputs.

Thus, the method allows optimizing the energy management based on a data sensitivity analysis regarding respective outputs of the energy optimizer with respect to different data inputs. In other words, the inventive method allows determining an impact or importance of a variation of different energy data inputs to a corresponding energy data output.

Likewise, the inventive method allows optimizing an energy management based on a parameter sensitivity analysis regarding an impact or importance of the variation of different energy parameters to energy parameter outputs.

The determination of the sensitivity with respect to varying input data and with respect to varying energy parameters may be performed separately or may be performed concurrently in form of a combined sensitivity determination considering both, varying data inputs and varying energy parameters.

The present method may also be used on existing forecasting and optimization algorithms thus providing an agnostic approach for an analysis of an energy management.

In a preferred embodiment, the first energy data input is formed by historical energy data and the method further comprises the following steps:
determining, by the energy optimizer, a first energy data forecast based on the historical energy data,
providing the first energy data forecast to an optimization algorithm,
determining by the optimization algorithm, a first optimization goal based on the first energy data forecast and an optimization parameter,
providing ground truth data to the optimization algorithm, and
determining by the optimization algorithm, a second optimization goal based on the ground truth data and the optimization parameter.

Thus, different optimization goals may be achieved based on the ground truth data on the one hand and based on a forecast of historical data on the other hand. A forecast may performed by any suitable algorithm or computational method. The forecast may be based on energy data of one or more time points or time windows and may provide a prediction about a temporal development of said energy data.

Ground truth data may be understood as known (past) real data. That is, historical data may not be no simulated, fictional or forecast data. Such ground truth data may be, for instance, energy data of the last year.

Furthermore, in another embodiment, the energy data input, e.g. the historical data, may be directly provided to the optimization algorithm without performing a forecast. In this case, the historical energy data may be used instead of the forecast data for the sensitivity analysis.

According to the present invention, optimization goals may be, for instance, peak (load) shaving, load shifting, cost reduction, energy input and/or output maximization or minimization. One optimization goal may be to achieve a quick charge of energy storage systems provided on the site. Another optimization goal may be to reduce power consumption during certain times of the day during which, for instance, a local or global power consumption is at a maximum. The present invention is of course not limited to the above noted examples but is applicable to further and different optimization goals that could be obtained by the energy optimizer.

The present invention may provide the advantage that, when a peak load is forecasted, sensitivity analysis outputs could be used to estimate what-if scenarios for better planning e.g. to develop suitable fallback strategies. This may enhance and safeguard an energy supply of a site.

In a preferred embodiment, the method further comprises the steps of:
varying the historical energy data,
providing the varied energy data to the energy optimizer,
determining, by the energy optimizer, one or more varied energy data forecasts based on the varied energy data,
providing the one or more varied energy data forecasts to the optimization algorithm, and
determining, by the optimization algorithm, one or more varied optimization goals based on the one or more varied energy data forecasts, wherein the optimization parameter is kept constant.

Thus, a sensitivity analysis regarding varying data points may be performed, allowing to estimate the importance or impact of the data variations with respect to the output of the optimization algorithm. Providing a constant optimization parameter may allow delimiting the analysis of the optimization algorithm on the impact of variances in the energy input data. In other words, a difference between an optimization goal based on ground truth data and a varied optimization goal based on varied energy data forecasts may then be directly assignable to the varied energy data.

The sensitivity determination for different energy data may thus be achieved by conducting a data sensitivity analysis as follows:
1. Select a fixed window/time period of historical data.
2. For the selected data, perturb the time series data (i.e., add disturbances) within appropriate ranges to create different variations of the historical data - these can also be assumed to represent various forecasts.
   ∘ For each of these forecasted data:
      ▪ Compute the differences between the original historical data of the selected time window and the perturbed version
      ▪ Run the optimization algorithm
   ∘ Store the differences values (or an aggregation of them, e.g. an average) and the consequent optimization result
3. Repeat (1) and (2) for several windows/time periods of historical data.

In a preferred embodiment, the method further comprises the steps of:
determining at least one forecast difference between the ground truth data and each of the one or more energy data forecasts,
determining at least one optimization goal difference between the second optimization goal based on a ground truth data and each of the optimization goals based on each of the energy data forecasts.

Thus, relevant differences between the forecasts and the ground truth data on the one hand, and the resulting optimization goals based on the ground truth data and the respective forecasts on the other hand may be obtained. In some embodiments, the method may also comprise to provide only one of the above determination steps, i.e. either determining at least one forecast difference between the ground truth data and each of the one or more energy data forecasts or determining at least one optimization goal difference between the second optimization goal based on a ground truth data and each of the optimization goals based on each of the energy data forecasts.

By determining the respective differences, a quality of the forecasts may be assessed since the forecasts can be compared to the historical data, i.e. the real past data. For instance, energy data of a last year's month may be supplied as historical data to an energy optimizer. The energy optimizer then may provide a forecast based said historical data for the next month. This forecasted data may then be compared to the known real historical ground truth data of the corresponding month of the last year. Thus, the quality of the forecast, e.g. an accuracy, can be determined.

Furthermore, the difference between different optimization goals based on the outcome of the optimization algorithm may provide insights about how a variation of the input data based on different forecast impacts the output of the optimization algorithm.

In a preferred embodiment, the first energy data input is formed by historical energy data and the method further comprises the following steps:
determining, by the energy optimizer, a constant energy data forecast based on the historical energy data,
providing the constant energy data forecast to an optimization algorithm,
determining, by the optimization algorithm, a first optimization goal based on the constant energy data forecast and a optimization parameter,
varying the optimization parameter,
providing the varied optimization parameter to the energy optimizer,
determining, by the optimization algorithm, one or more varied optimization goals based on the constant energy data forecast and the one or more varied optimization parameters.

Thus, a sensitivity analysis regarding varying optimization parameters may be performed, allowing to estimate the importance or impact of the parameter variations with respect to the output of the optimization algorithm. It may be accordingly determined how sensitive the energy optimizer is to changes of the optimization parameters. Providing a constant energy data forecast may allow delimiting an analysis of the optimization algorithm on the impact of variances in the energy parameter. In other words, a difference between the optimization goal based on ground truth data and the varied optimization goal based on varied optimization parameter may be directly assignable to the varied optimization parameter.

The sensitivity determination for different parameters may thus be achieved by conducting a parameter sensitivity analysis as follows:
1. Select a fixed window/time period of historical data.
   ∘ Either simply use this historical data or pass it to the forecaster to generate the forecast for the given timeframe
2. For the selected data, vary the aforementioned input parameters within appropriate ranges to create different permutations of settings/configurations/scenarios.
   ∘ For each of these configurations, run the optimization algorithm
   ∘ Store the configuration and the consequent optimization result
3. Repeat (1) and (2) for several windows/time periods of historical data.

The invention further relates to a computer-program product comprising instructions, which, when executed by a computer, cause the computer to carry out any of the methods of the present disclosure.

The features of the system according to the present invention may be implemented by respective suitable digital or computational means, which can include, for instance, one or more computers, apps and/or networks. The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The invention further relates to a computer-readable medium comprising instructions which, when executed by a computer, cause the computer to carry out any of the methods of the present disclosure.

The features and advantages outlined above in the context of the system and the method similarly apply to the computer program product and the computer-readable medium described herein.

A computer program may be stored/distributed on a suitable medium such as an optical storage medium or a solid-state medium, supplied together with or as part of other hardware, but may also be distributed in other forms, such as via the Internet or other wired or wireless telecommunication systems.

Further features, examples, and advantages will become apparent from the following detailed description of preferred embodiments and the accompanying figures.

### 4. BRIEF DESCRIPTION OF THE DRAWINGS

For a better understanding of the present invention, and to illustrate its practicality, figures are provided in the following and reference is made thereto. It should be understood that the figures represent only exemplary embodiments and thus in no way limit the scope of the claimed invention. Identical or like-acting elements are indicated throughout by the same reference signs. Any reference signs in the claims should not be construed as limiting the scope of the claims.

In the accompanying drawings,
- Figure 1: schematically illustrates a system for optimizing an energy management of a site according to the present invention;
- Figure 2: is a flowchart illustrating a method for optimizing an energy management of a site according to the present invention;
- Figure 3: is a flowchart illustrating a method for optimizing an energy management of a site according to the present invention;
- Figure 4: schematically illustrates a perturbation of historical energy data;
- Figure 5: schematically illustrates a parameter sensitivity result for different optimization parameters.

### 5. DESCRIPTION OF EMBODIMENTS

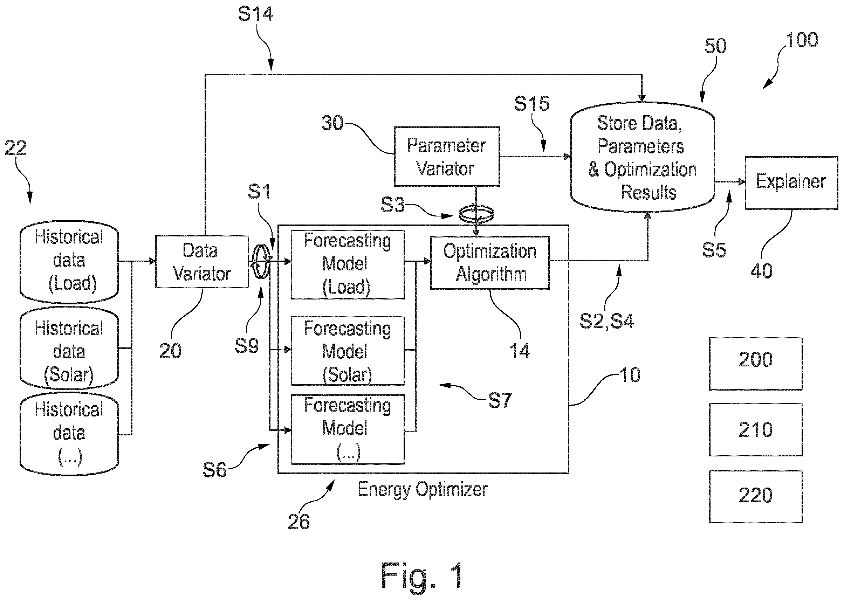

Figure 1 illustrates a system 100 for optimizing an energy management of a site according to the present invention. Herein, historical energy data 22 from different sources, such as load historical energy data, solar historical energy data and further unspecified historical energy data, for instance of a given time point or time range, is provided to a data variator 20. The historical energy data is then provided (cf. step S1) as an energy data input to the energy optimizer 10. The energy optimizer then determines (cf. step S6) a forecast for each of the energy data provided, e.g. for a next time instance. The energy forecast data 26 or the historical data is then provided to an optimization algorithm 14 (cf. step S7). The optimization algorithm 14 is also provided with an energy parameter input (cf. step S3). The energy optimizer then determines (cf. step S2) an energy data output, which is provided to a data storage 50, wherein the resulting data obtained from the energy optimizer 10 is saved.

The historical energy data 22 of the different sources can also be varied (cf. step S9) by the data variator 20. Herein, perturbations/variations in the energy data for a given time instance are applied to the data set. The thus modified data set can then also be provided to the energy optimizer 10, e.g. for creating a respective forecast model. The resulting energy data forecasts 26 can then be provided to the optimization algorithm 14. Alternatively, the pertubated energy data can be provided directly to the optimization algorithm 14 as an input. Thus, no forecast is then used as data input. The energy optimizer 10 then calculates a respective energy data output based on the pertubated data, which is also provided to the data storage 50.

Likewise, the parameter variator 30 can provide different optimization parameters 32 to the energy optimizer 10 (cf. step S3). Thus, for instance, different optimization parameters 32 can be employed together with constant or varied energy data forecasts 26 or with constant or varied historical energy data 22. The energy optimizer 10 accordingly determines one or more energy parameter outputs (cf. step S4), which can be accordingly provided and saved in the data storage 50.

Any information concerning the data input, e.g. the applied variations can also be saved or stored in the data storage 50 (cf. step S14). Likewise, any information concerning the parameters, e.g. the applied variations can be also saved or stored in the data storage 50 (cf. step S15).

From the resulting energy data output and the resulting parameter output, a sensitivity for the respective data and/or parameter can be determined (cf. step S5), which can be provided to an explainer unit 40. The energy data output and the parameter output may be, for instance, different optimization results obtained from the energy optimizer 10 for different energy data input and/or different optimization parameters.

An explainer unit 40 can be a machine learning or explainable Al, unit that is trained by the stored input and output data. Accordingly, the explainer unit 40 may clarify information to a user regarding potential impacts of variations of the input data to the output data and/or potential impacts of variations of different optimization parameters to the output data.

Further, a computer-program product 210 and a computer-readable medium 220 is shown, each comprising instructions, which, when executed by a computer 200, cause the computer 200 to carry out the method according to the present invention.

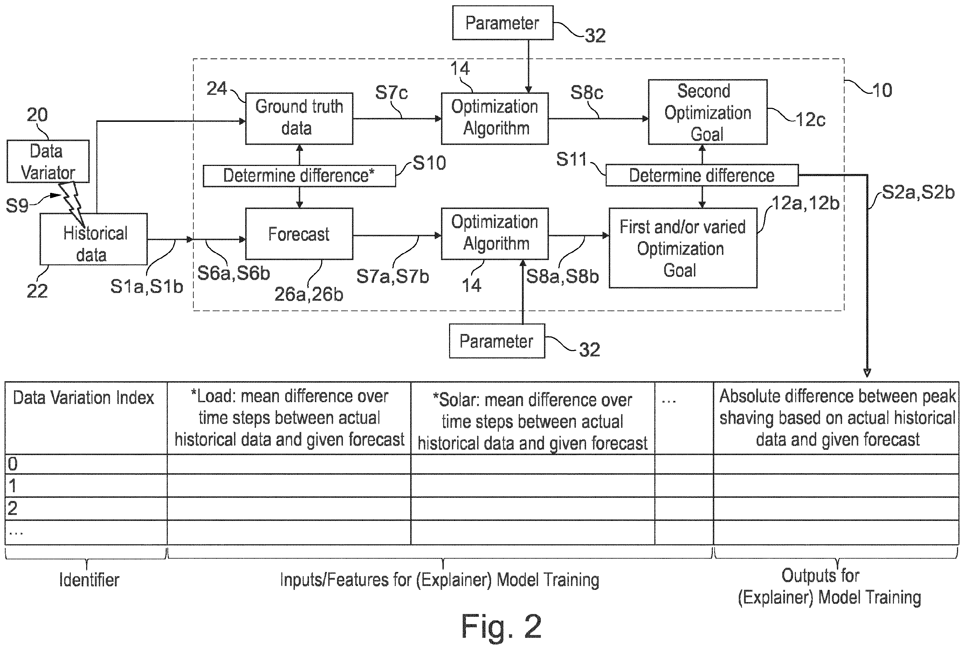

Figure 2 is a flowchart illustrating a method according to the present invention, in particular with respect to a sensitivity analysis based on the variation of energy input data. Herein, historical energy data 22 is provided in step S1a as a first energy data input to an energy optimizer 10. This historical energy data 22 can be, for instance, a past energy consumption of a site. From the data input, the energy optimizer 10 determines a first energy data forecast 26a in step S6a. This can be, for instance, the forecast about an energy consumption for the following day. This energy data forecast can then be compared to the ground truth data 24, obtained based on the historical data 22. This is, for instance, the known energy consumption for that day. The difference between the first energy data forecast 26a and the ground truth data 24 is then determined in step S10. In step S7a, the first energy data forecast 26a is then provided to an optimization algorithm 14. The optimization of algorithm 14 then employs an optimization parameter 32 to determine in step S8a a first optimization goal 12a, e.g. a peak load shaving.

Likewise, in step S7c, the ground truth data 24 is provided to the optimization algorithm 14. The optimization of algorithm 14 then determines, under employment of the optimization parameter 32, in step S8c a second optimization goal 12c, for instance a different peak load shaving. The optimization parameter 32 is kept constant.

The first and second optimization goals 12a, 12c are then compared, and the difference is determined in step S11. As explained with respect to figure 1, historical energy data of different origins can be used, e.g. load, solar, etc.

As indicated in step S9, the historical energy data 22 can be varied by data variator 20. For instance, perturbations can be included to vary the data, e.g. the load for a specific time window. This varied data is then provided in step S1b as second energy data input to the energy optimizer 10. Then, as indicated step S6b, a second energy data forecast 26b, which is also referred to as a varied energy data forecast, can be determined. The difference between the varied energy data forecast 26b based on the varied energy data and the ground truth data 24 is accordingly determined in step S10. It is noted that the varied historical data can also be employed instead of a forecast for a comparison with the ground truth data 24. In step S7b, the second energy data forecast 26b (or the varied historical data) is then provided to an optimization algorithm 14. The optimization algorithm 14 then employs an optimization parameter 32, which is kept constant, to determine in step S8b a varied optimization goal based on the varied historical energy data, i.e. a varied data optimization goal 12b, for instance a peak load shaving.

The varied data optimization goal 12b and the second optimization goal 12c are then compared and respective differences are determined in step S11.

Thus, it can be accordingly determined how sensitive the energy optimizer is with respect to energy data input perturbations or variances. In other words, it can be determined how much the energy data output changes, if a varied energy data input is provided.

The differences determined in step S10 between the first energy data forecast 26a and the ground truth data 24 can be stored in a table, as depicted in the lower part of Figure 2 (indicated by "*"). Likewise, the difference determined in step S10 between the varied energy data forecast 26b and the ground truth data 24 could be stored in the table.

The differences determined in step S10 can be determined for historical energy data of different origins, e.g. load, solar, etc. Hence, as depicted in the second and third column of the depicted table, a mean difference over time steps between actual historical data and a given forecast can determined and saved, for instance, regarding "energy load" and "solar". It is noted that the source is not limited to these examples but also further energy data sources can be assessed, which then could be stored in respective further additional columns.

The results of the differences determined in step S11, between the first optimization goal 12a, based on a first forecast, and the second optimization goal 12c, based on ground truth data 24, can be determined and stored in the right column of the depicted table in step S2a. Likewise, in step S2b, the results of the differences determined in step S11 between the varied optimization goal(s) based on a varied energy data forecast 26b and the second optimization goal based on ground truth data 24 can be determined and saved and stored in the right column of the table.

Thus, the differences determined in steps S10 and S11 for the respective varied energy data could be determined and saved for each source. The variation applied is indicated by an identifier ("data variation index"), which is stored in the left column. Thus, a data sensitivity can be estimated regarding an impact or importance of variation in the data inputs with respect to the corresponding data outputs.

The resulting matrix of the table can then be accordingly used to train an Explainer Al or machine learning unit. Herein, the differences obtained step S10 can be used as inputs or features for the model training and the differences obtained step S11 can be used as outputs for features for the model training.

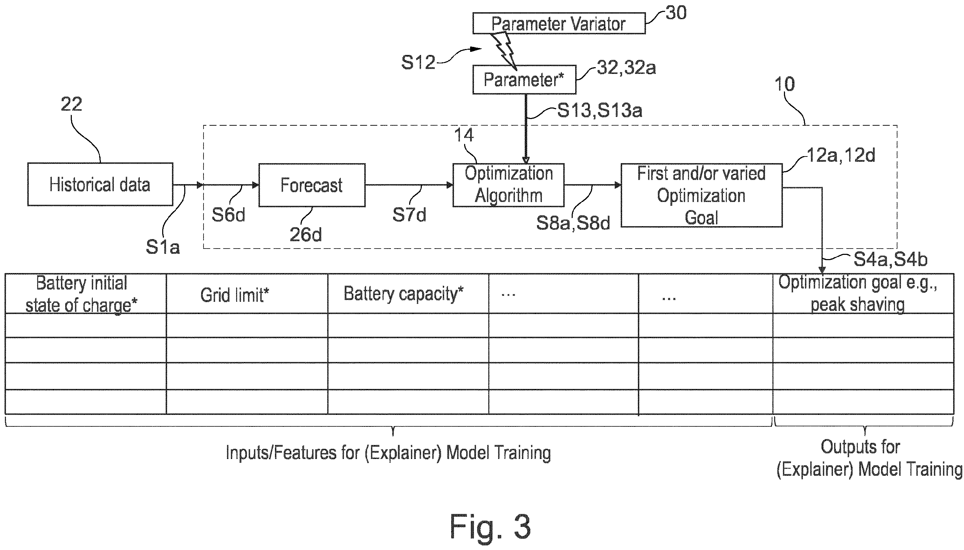

Figure 3 is a flowchart illustrating a method according to the present invention, in particular with respect to a sensitivity analysis based on the variation of the optimization parameters 32. It is noted that this method can be provided in addition to or alternatively to the method described with respect to figure 2.

Similar to the method of figure 2, historical energy data 22 is provided in step S1a a as first energy data input to an energy optimizer 10. However, contrary to the method of figure 2, the historical data is not varied but kept constant. From the input data, the energy optimizer 10 determines in step S6d one or more forecasts, for instance a constant energy data forecast 26d, based on the constant historical data. In step S7d, the constant energy data forecast 26d is then provided to an optimization algorithm 14. The historical energy data 22 may also be provided directly to the optimization algorithm 14. The optimization of algorithm 14 then employs an optimization parameter 32 provided in step S13 to determine in step S8a a first optimization goal 12a. Accordingly, a first energy parameter output could be determined and stored in a table, as indicated in step S4a.

As indicated in step S12, one or more optimization parameters 32 can be varied by a parameter variator 30. As indicated in step S13a, a varied optimization parameter 32a can be provided to the energy optimizer 10. The optimization algorithm 14 then employs the varied optimization parameter 32a to determine in step S8d a varied parameter optimization goal 12d based on the varied optimization parameter 32a. Accordingly, a second energy parameter output could be determined and stored in the table, as indicated in step S4b.

It can be accordingly determined how sensitive the energy optimizer is with respect to data perturbations or variances. In other words, it can be determined how the energy parameter output changes when a varied energy parameter input is provided.

In the depicted embodiment, the different parameters 32, 32a, exemplarily relate to a "battery initial state of charge", a "grid limit" and a "battery capacity" (each indicated by "*"), which are accordingly saved in columns 2 and 3 of the table, as depicted in the lower part of Fig. 3. It is clear that also any further suitable optimization parameters can be added in further columns. Likewise, the corresponding results of the first and varied optimization goals 12a and 12d determined in steps S4a and S4b for each optimization parameter can be stored or saved in the table (cf. right column). Thus, a parameter sensitivity can be estimated regarding an impact or importance of the variation of the different energy parameters with respect to the corresponding outputs.

The resulting matrix of the table can be accordingly used to train an Explainer AI or machine learning unit. Herein, the different optimization parameters can be used as inputs or features for the model training and the corresponding first and second optimization goals can be used as outputs for features for the model training.

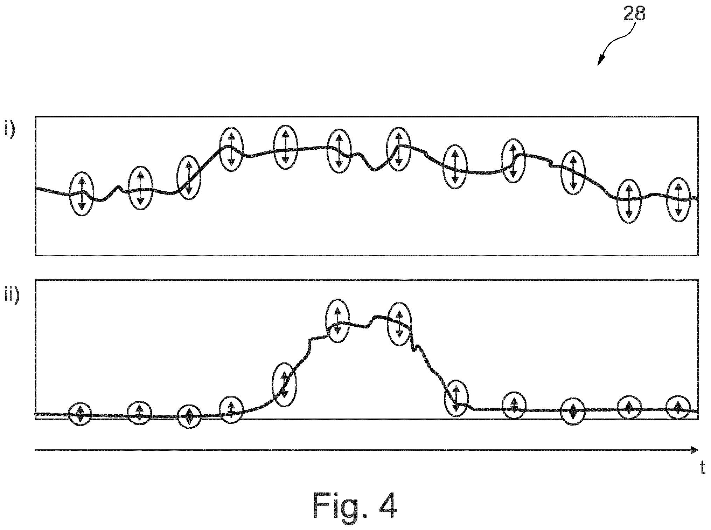

Figure 4 shows two examples (i and ii) of energy data sets 28 for a certain time period t. On the x-axis, the time is illustrated and on the y-axis the amplitude is illustrated, which may be, for instance, a power consumption. As is indicated by the small double-arrows, the data sets can be accordingly varied in the amplitude to create perturbations in the energy data set. The perturbations can have a, for instance, a constant amplitude variation range, as indicated in the upper figure i) or can have different amplitude variation ranges, as indicated in the lower figure ii). The amplitude variations may be applied for each data point or only for certain data points. The variations may also be applied by providing a respective constant offset or by creating a random deviation from the original data set. Any type of suitable perturbations or variations may be conceivable.

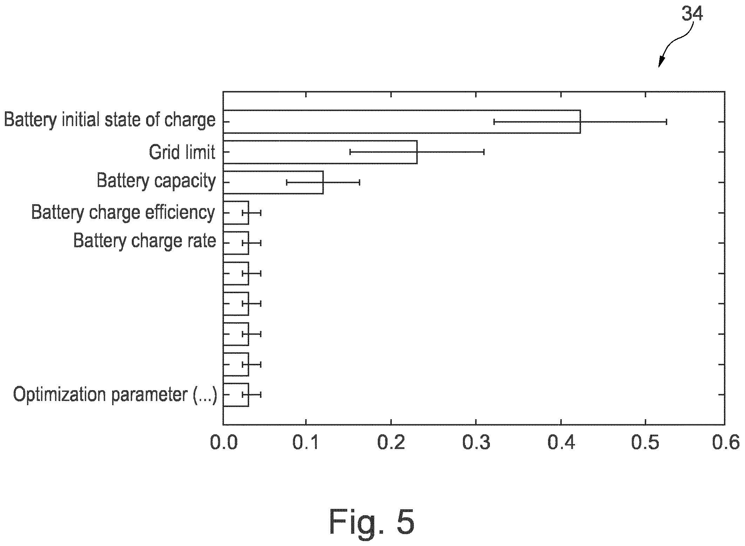

Figure 5 shows an example of a parameter sensitivity result 34, as might be indicated to a user via an Al explainer. The figure shows the visualization of the importance or sensitivity of each of the optimization parameters with respect to the optimization output. In the present example, the battery initial state of charge shows a high value. The optimization output is accordingly highly impacted by that optimization parameter. Contrary to this, the battery charge rate shows only a low value and is therefore of less importance and has only a little impact on the optimization output. Furthermore, as depicted, also respective error margins for each of the parameters may be provided.

### LIST OF REFERENCE SIGNS

- 10: energy optimizer
- 12a: first optimization goal
- 12b: varied data optimization goal
- 12c: second optimization goal
- 12d: varied parameter optimization goal
- 14: optimization algorithm
- 20: data variator
- 22: historical energy data
- 24: ground truth data
- 26: energy data forecast
- 26a: first energy data forecast
- 26b: varied energy data forecast
- 26d: constant energy data forecast
- 28: energy data sets
- 30: parameter variator
- 32: optimization parameter
- 32a: varied optimization parameter
- 34: parameter sensitivity result
- 40: explainer unit
- 50: data storage
- 100: system
- 200: computer
- 210: computer-program product
- 220: computer-readable medium
- S1: provision of energy data input
- S1a: provision of first energy data input
- S1b: provision of second energy data input
- S2: determination of energy data output
- S2a: determination of first energy data output
- S2b: determination of second energy data output
- S3: provision of energy parameter input
- S4: determination of energy parameter output
- S4a: determination of first energy parameter output
- S4b: determination of second energy parameter output
- S5: determination of sensitivity
- S6: determination of forecast
- S6a: determination of first forecast
- S6b: determination of second forecast
- S7: provision of forecast or historical data
- S7a: provision of first energy data forecast
- S7b: provision of second energy data forecast
- S7c: provision of ground truth data
- S7d: provision of constant energy data forecast
- S8a: determination of first optimization goal
- S8b: determination of varied optimization goal based on varied data
- S8c: determination of second optimization goal
- S8d: determination of varied optimization goal based on varied parameter
- S9: variation of energy data
- S10: determination of forecast difference
- S11: determination of optimization goal difference
- S12: variation of the optimization parameter
- S13: provision of optimization parameter
- S13a: provision of varied optimization parameter
- S14: storing data information
- S15: storing parameter information

## Claims

1. A system (100) for optimizing an energy management of a site, the system (100) comprising:
an energy optimizer (10), wherein the energy optimizer (10) is adapted to determine one or more optimization goals (12) based on an optimization algorithm (14),
a data variator (20), wherein the data variator (20) is adapted to provide at least one first energy data input and at least one second energy data input, different to the first energy data input, to the energy optimizer (10),
wherein the energy optimizer (10) is adapted to receive the first and second energy data inputs from the data variator (20), and
to determine, based the first and second energy data inputs, respective at least one first and second energy data outputs via the optimization algorithm (14),
wherein a data sensitivity of the energy optimizer (10) can be determined with respect to the first and second energy data inputs and the first and second energy data outputs.

2. The system (100) according to the preceding claim,
wherein the system (100) comprises a parameter variator (30) additionally or alternatively to the data variator (20),
wherein the parameter variator (30) is adapted to provide at least one first energy parameter input and at least one second energy parameter input, different to the first energy parameter input and,
wherein the energy optimizer (10) is adapted to:
receive the first and second parameter inputs from the parameter variator (30), and to
determine, based the first and second energy parameter inputs, respective at least one first and second energy parameter outputs via the optimization algorithm (14),
wherein a parameter sensitivity of the energy optimizer (10) can be determined with respect to the first and second energy parameter inputs and the first and second energy parameter outputs.

3. The system (100) according to the preceding claim, wherein system (100) comprises the data variator (20) and the parameter variator (30), and
wherein a combined data and parameter sensitivity of the energy optimizer (10) can be determined with respect to combination of the first and second energy data inputs and the first and second energy data outputs, as well as the first and second energy parameter inputs and the first and second energy parameter outputs.

4. System (100) according to one of the preceding claims, wherein the at least one first energy data input is based on historical energy data (22), and wherein the data variator (20) is preferably adapted to vary the historical energy data (22) to create and provide the second energy data input.

5. System (100) according to the preceding claim, wherein the historical energy data (22) is based on energy data of at least one energy consumer and/or at least one energy producer.

6. System (100) according to one of the preceding claims 2 to 5, wherein the first energy parameter input is based on an energy parameter, and wherein the parameter variator (30) is preferably adapted to vary the energy parameter to create and provide, based on the varied energy parameter, the second energy parameter input.

7. System (100) according to the preceding claim, wherein the energy parameter is one or more of the following:
• Initial state-of-charge of each battery storage system,
• Limit/capacity of each battery storage system,
• Charge rate and efficiency of each battery storage system,
• Limit of energy that can be taken from the electrical grid,
• Look-ahead time of the forecasting algorithm.

8. System (100) according to one of the preceding claims, further comprising an explainer unit (40) adapted to provide explanations about the sensitivity of the energy optimizer (10) based on the energy data inputs/outputs and/or the energy parameter inputs/outputs.

9. A method for optimizing an energy management of site, comprising the following steps:
providing to an energy optimizer (10) at least one first and second energy data inputs (S1 a/S1b) and/or at least one first and second energy parameter inputs,
determining, by the energy optimizer (10), based on the first and second energy data inputs and/or the first and second energy parameter inputs, respective at least one first and second energy data outputs (S2a/S2b), and/or at least one first and second energy parameter outputs (S4a/S4b), and
determining a data sensitivity and/or parameter sensitivity of the energy optimizer (10) based on the energy data inputs and/or the energy parameter inputs, and based on the energy data outputs and/or the energy parameter outputs.

10. The method according to the preceding claim,
wherein the first energy data input is formed by historical energy data (22),
the method further comprising the following steps:
determining (S6a), by the energy optimizer (10), a first energy data forecast (26a) based on the historical energy data (22),
providing (S7a) the first energy data forecast (26a) to an optimization algorithm (14),
determining (S8a) by the optimization algorithm (14), a first optimization goal (12a) based on the first energy data forecast (26a) and an optimization parameter (32),
providing (S7c) ground truth data (24) to the optimization algorithm (14), and
determining (S8c) by the optimization algorithm (14), a second optimization goal (12c) based on the ground truth data (24) and the optimization parameter (32).

11. The method according to the preceding claim, further comprising the steps of:
varying (S9) the historical energy data (22),
providing (S1b) the varied energy data to the energy optimizer (10),
determining (S6b), by the energy optimizer (10), one or more varied energy data forecasts (26b) based on the varied energy data,
providing (S7b) the one or more varied energy data forecasts (26b) to the optimization algorithm (14), and
determining (S8b), by the optimization algorithm (14), one or more varied data optimization goals (12b) based on the one or more varied energy data forecasts (26b), wherein the optimization parameter (32) is kept constant.

12. The method according to the preceding claim, further comprising the steps of
determining (S10) at least one forecast difference between the ground truth data (24) and each of the one or more energy data forecasts (26a, 26b),
determining (S11) at least one optimization goal difference between the second optimization goal (12c) based on a ground truth data and each of the optimization goals (12a, 12b) based on each of the energy data forecasts (26a, 26b).

13. The method according to one of the preceding claims,
wherein the first energy data input is formed by historical energy data (22), the method further comprising the following steps:
determining (S6d), by the energy optimizer (10), a constant energy data forecast (26d) based on the historical energy data (22),
providing (S7d) the constant energy data forecast to an optimization algorithm (14),
determining (S8a), by the optimization algorithm (14), a first optimization goal (12a) based on the constant energy data forecast (26d) and a optimization parameter (32),
varying (S12) the optimization parameter (32),
providing (S13) the varied optimization parameter to the energy optimizer (10),
determining (S8d), by the optimization algorithm (14), one or more varied optimization goals (12d) based on the constant energy data forecast (26d) and the one or more varied optimization parameters (32a).

14. A computer-program product (210) comprising instructions, which, when executed by a computer (200), cause the computer (200) to carry out the method of any of claims 9 to 13.

15. A computer-readable medium (220) comprising instructions which, when executed by a computer (200), cause the computer (200) to carry out the method of any of claims 9 to 13.
